# EUROPÄISCHE PATENTANMELDUNG

(11) **EP 0 522 385 A2**
(43) Veröffentlichungstag der Anmeldung: **13.01.1993**
(21) Anmeldenummer: 92110906.2
(22) Anmeldetag: 27.06.1992
(51) Int. Cl.: H01R 35/02, H02G 11/00, H01H 1/58

(54) **Gehäuse mit drehbar angeordnetem elektrischen Bauteil**

(30) Priorität: 06.07.1991 DE 4122424
(71) Anmelder: PIERBURG GMBH, D-41460 Neuss (DE)
(72) Erfinder: Hassel, Manfred, W-4005 Meerbusch 1 (DE)

(57) **Zusammenfassung**

2.1 Bekannte Gehäuse zeigen auf Torsion beanspruchte Stromzuführungen (Kabel). Diese Anordnung läßt sich nur bei längeren Bauteilen verwirklichen.

2.2 Für kurze Gehäuse sieht die Erfindung daher vor, daß das Kabel (4) über konzentrisch zur Drehachse (6) angeordnete Ringnuten (5, 7) des Gehäuses (1) und des Bauteils (2) bzw. Bauteilträgers (3) in gleicher Umfangrichtung austritt und durch einander zugewandte Abstützflächen (10, 11) des Gehäuses (1) und des Bauteils (2) bzw. Bauteilträgers (3) so abgestützt ist, daß sich eine Umlenkkrümmung (11) des Kabels (4) ergibt.

2.3 Das neue Gehäuse eignet sich für Verstellungen bis max. 360° (Winkelgrad) bei geringen Stellkräften.

## Beschreibung

Die Erfindung betrifft ein Gehäuse mit drehbar angeordnetem elektrischen Bauteil nach dem Oberbegriff des Patentanspruchs 1.

Eine derartige Einrichtung ist beispielsweise in der DE-PS 30 40 636 beschrieben. Diese weist eine Hohlwelle auf, auf der ein elektrisches Bauteil angeordnet ist, dessen Stromzuführung durch ein durch die Hohlwelle ragendes flexibles Kabel erfolgt, so daß die ganze Länge der Hohlachse als Torsionslänge für das Kabel zur Verfügung steht.

Obwohl sich diese Stromzuführung sehr bewährt hat, läßt sie sich nicht ohne weiteres auf Gegenstände übertragen, bei denen das Bauteil z. B. von einem Elektromotor angetrieben wird, der jedoch hauptsächlich für den Antrieb eines weiteren Bauteils, z. B. einer Drosselklappe, vorgesehen ist.

Hiervon ausgehend liegt der Erfindung die Aufgabe zugrunde, eine andere Art der Stromzuführung aufzufinden, wobei diese bei geringstem Bauraum und - aufwand erreicht werden soll.

Diese Aufgabe ist bei dem Gegenstand nach dem Oberbegriff des Patentanspruchs 1 durch die im Kennzeichen des Anspruchs 1 angegebenen Merkmalen gelöst worden. Vorteilhafte Weiterbildungen des Gegenstandes nach Anspruch 1 sind in den Unteransprüchen angegeben.

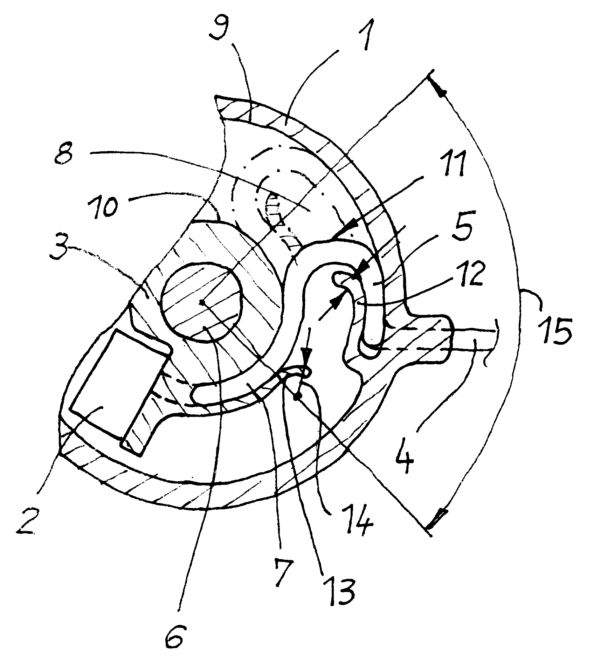

Mit der Erfindung erreichbare Vorteile werden in der nachfolgenden Beschreibung eines Ausführungsbeispiels angegeben, das in der Zeichnung dargestellt ist.

Die zeigt einen Schnitt durch eine Axialebene eines Gehäuses 1 und eines elektrischen Bauteils 2, das auf einem Bauteilträger 3 angeordnet ist. Bei dem elektrischen Bauteil 3 kann es sich um eine Elektromagnetupplung, einen Schalter oder um einen Drehsteller handeln. Ein von außen in das Gehäuse 1 eingeführtes flexibles Kabel 4 mündet in eine Ringnut 5 ein, die konzentrisch zu einer im Gehäuse 1 gelagerten Welle 6 angeordnet ist. Bei dieser Welle 6 kann es sich um eine Drosselklappenwelle eines Drosselklappenstutzens einer Brennkraftmaschine handeln, dessen Drosselklappe nach Maßgabe des Motorbetreibers verstellt wird.
Der Bauteilträger 3 ist fest mit dieser Welle 6 verbunden und das mit dem Bauteil 2 verbundene Kabel 4 mündet ebenfalls in eine konzentrisch zur Welle 6 ausgeführten Ringnut 7 des Bauteilträgers 3 ein. Durch diese beiden Ringnuten 5 und 7 tritt das Kabel 4 in gleicher Umfangrichtung in einen Ringspalt 8 ein, der von Abstützflächen 9, 10 des Gehäuses 1 und des Bauteilträgers 3 radial begrenzt ist. Diese Abstützflächen 9 und 10 sind über die Kabelaustritte hinausgehende Ringnutwände, die unterschiedliche Radien zur Drehachse der Welle 4 aufweisen, jedoch auf einer gleichen Axialebene (Schnittebene) liegen. Diese Abstützflächen stützen das durch eine Umlenkkrümmung 11 bestehende Federmoment des Kabels 4 ab.

Vorteilhafterweise laufen die den Abstützflächen 9, 10 bildenden Ringnutwänden gegenüberliegenden Ringnutwände 12, 13 des Gehäuses 1 und des Bauteilträgers 3 mit einem Radius 14 aus, der dem inneren Umlenkkrümmungsradius entspricht.

Die Verstellung einer Drosselklappe erfolgt innerhalb eines Winkels von max. 90°, so daß das Bauteil 2 ebenfalls maximal um diesen Betrag 15 geschwenkt wird. Bei der Verstellung wandert die Umlenkkrümmung 11 des Kabels 4 mit halbierter Geschwindigkeit des Bauteils 2 mit.

Mit der Erfindung liegt eine einfache und geringen Bauraum und -aufwand erfordernde Stromzuführung vor, die eine lange Lebensdauer und geringe zusätzliche Verstellkräfte erwarten läßt.

Die Erfindung eignet sich auch für andere Anwendungsfälle und ermöglicht eine Verstellung, die auch größer als 90° bis maximal 360° ist. Es versteht sich von selbst, daß die Ringnuten auch durch zusammengesetzte Teile gebildet werden können.

## Patentansprüche

1. Gehäuse mit drehbar angeordnetem elektrischen Bauteil mit einem Drehwinkel kleiner als 360°, mit einer Stromzuführung über ein flexibles Kabel, das mit dem Gehäuse und dem Bauteil verbunden ist, **dadurch gekennzeichnet**, daß das Kabel (4) über konzentrisch zur Drehachse (6) angeordnete Ringnuten (5, 7) des Gehäuses (1) und des Bauteils (2) bzw. Bauteilträgers (3) in gleicher Umfangrichtung austritt und durch einander zugewandte Abstützflächen (10, 11) des Gehäuses (1) und des Bauteils (2) bzw. Bauteilträgers (3) so abgestützt ist, daß sich eine Umlenkkrümmung (11) des Kabels (4) ergibt.

2. Gehäuse nach Anspruch 1, **dadurch gekennzeichnet**, daß die Abstützflächen (10, 11) durch über den Kabelaustritt hinausreichende Ringnutwände gebildet sind, die mit unterschiedlichen Radien zur Drehachse (6) auf gleicher Axialebene angeordnet sind.

3. Gehäuse nach Anspruch 2, **dadurch gekennzeichnet**, daß die der die Abstützwand (10, 11) bildende Ringnutwand gegenüberliegende Ringnutwand (12, 13) des Gehäuses (1) und des Bauteils (2) bzw. Bauteilträgers (3) mit einem wenigstens dem inneren Radius der Kabelumlenkkrümmung (11) entsprechenden Radius (14) ausläuft.

4. Gehäuse nach einem der vorstehenden Ansprüche, **dadurch gekennzeichnet**, daß das Bauteil (2) von einem Schalter, einer Magnetkupplung oder einem Elektromotor gebildet wird.

5. Einrichtung nach Anspruch 4, **dadurch gekennzeichnet**, daß das Gehäuse (1) als Teil eines Drosselklappenstutzens einer Brennkraftmaschine gebildet ist.

6. Einrichtung nach Amspruch 5, **dadurch gekennzeichnet**, daß das Bauteil (2) bzw. der Bauteilträgers (3) auf einer Drosselklappenwelle (6) angeordnet ist.
